# EUROPÄISCHE PATENTSCHRIFT

(11) **EP 2 497 979 B1**
(45) Veröffentlichungstag und Bekanntmachung des Hinweises auf die Patenterteilung: **05.06.2013**
(21) Anmeldenummer: 11002019.5
(22) Anmeldetag: 11.03.2011
(51) Int. Cl.: F16K 1/44

(54) **Verwendung antimikrobieller Materialien und Beschichtungen in Prozesskomponenten**
Use of antimicrobial materials and coatings in process components
Utilisation de matériaux et revêtements antimicrobiens dans des composants de processus

(43) Veröffentlichungstag der Anmeldung: 12.09.2012
(73) Patentinhaber: GEA Tuchenhagen GmbH, 21514 Büchen (DE)
(72) Erfinder: Ladenburger, Anton, 73485 Zipplingen (DE); Fahrenbach, Peter, 21035 Hamburg (DE); Südel, Matthias, 23626 Ratekau (DE)
(74) Vertreter: Eisenführ, Speiser & Partner

(56) Entgegenhaltungen:
- EP-A1- 1 688 075
- WO-A1-02/36701
- Anonym: "VARIVENT® Ventile", GEA TUCHENHAGEN, April 2010 (2010-04), Seiten 1-16, XP002656095, Gefunden im Internet: URL:http://www.tuchenhagen.com/fileadmin/G EA_Tuchenhagen/Global/PDFs/Brochures/VARIV ENT/610d-VARIVENT-Valves-11-2010.pdf [gefunden am 2011-08-07]

## Beschreibung

### TECHNISCHES GEBIET

Die Erfindung betrifft die Verwendung eines Materials mit biozider oder bakterizider oder antibakterieller oder antimikrobieller Wirkung oder einer Materialkombination, die mehr als ein genanntes Material aufweist, zur Ausrüstung einer Prozesskomponente der Prozesstechnik für Nahrungsmittelprodukte. Darüber hinaus betrifft die Erfindung eine Prozesskomponente der Prozesstechnik für Nahrungsmittelprodukte und deren Ausrüstung mit diesbezüglichen Materialien oder Materialkombinationen.

### STAND DER TECHNIK

Zu den Prozesskomponenten der Prozesstechnik für Nahrungsmittelprodukte gehören Ventile, beispielsweise ausgebildet als Hubventile oder Scheiben- oder Klappenventile, Pumpen, Reinigungsgeräte, Mischeinrichtungen, Homogenisiereinrichtungen, Begasungseinrichtungen, Wärmeaustauscher und vieles andere mehr. Entscheidend für die Auswahl der Prozesskomponenten im Rahmen der vorliegenden Erfindung ist, dass wenigstens ein Innenraum der Prozesskomponente mit dem Nahrungsmittelprodukt beaufschlagt ist und dieser Innenraum gegenüber der Umgebung der Prozesskomponente durch statisch oder dynamisch wirkende Dichtungen abgedichtet ist.

Statisch wirkende Dichtungen der in Rede stehenden Art liegen beispielweise vor, wenn Gehäuseteile der Prozesskomponente miteinander über eine sogenannte Gehäusedichtung derart abgedichtet sind, dass diese Abdichtungsstelle gleichzeitig auch eine Abdichtungsstelle zwischen produktbeaufschlagtem Innenraum der Prozesskomponente und ihrer Umgebung darstellt. Eine dynamisch wirkende Dichtung der in Rede stehenden Art liegt vor, wenn beispielsweise ein bewegliches Bauteile, beispielsweise eine Betätigungsstange, aus der Umgebung der Prozesskomponente in deren Innenraum verschieblich eingreift und an der Durchdringungsstelle mit dem Gehäuse über eine sogenannte Stangendichtung permanent eine sichere Abdichtung erfahren muss. Eine dynamisch wirkende Dichtung liegt aber auch vor, wenn eine Verbindungsöffnung zwischen Umgebung der Prozesskomponente und ihrem Innenraum temporär mit einem Schließglied, das eine Sitzdichtung aufweist, zu verschließen ist.

Eine Prozesskomponente, bei der die vorgenannten drei Abdichtungsformen mit Gehäusedichtung, Stangendichtung und Sitzdichtung in Summe Anwendung finden können, ist beispielsweise ein Ventil, das als Hub- oder Scheiben- oder Klappenventil ausgebildet ist. Beim Hubventil sind dies insbesondere Einsitz-, Doppelsitz- oder Doppeldichtventile, wie sie beispielsweise aus der Firmendruckschrift **GEA Tuchenhagen, VARIVENT^{®} Ventile, 610d-08109**, August 2009 **[1],** bekannt sind.

Die Abdichtungsstellen der drei Abdichtungsformen sind in unterschiedlichem Grade reinigungskritisch, weil in die mehr oder weniger engen Spalte zwischen der jeweiligen Dichtung und den diese berandenden Wandungen Produkt eindringen und die Dichtung sogar hinterwandern kann, das dann einer Abreinigung nur schwer zugänglich ist. Das erwähnte Eindringen von Produkt in die Spalte wird unter Anderem hervorgerufen durch Deformation der jeweiligen produktbeaufschlagten Dichtung infolge Druckschwankungen im Produkt und ggf. Relativbewegungen der Gehäuseteile zueinander infolge von äußeren oder inneren Kraftwirkungen und/oder Temperaturschwankungen (Gehäusedichtung), durch Walkbewegungen der Dichtung im Zuge des Einfahrens der Dichtung in den zugeordneten Sitz und des Ausfahrens aus diesem (Sitzdichtung) und durch planmäßige Relativbewegung zwischen bewegter Betätigungsstange und zugeordneter Dichtung (Stangendichtung).

Bei der vorstehend erwähnten Stangendichtung führt die Verschiebebewegung der Betätigungsstange zum sog. "Fahrstuhleffekt", bei dem Produkt der beweglichen Betätigungsstange anhaftet, das Produkt von der Stangendichtung nicht vollständig abgestreift werden kann, weil keine der heute bekannten Stangendichtungen über eine hundertprozentige Abstreifwirkung verfügt, und sodann zwangsläufig hinter die Stangendichtung in deren umgebungsseitigen Bereich verschleppt wird. Wenn es dort im Wege einer Stangenreinigung mittels eines sog. Spülschlosses, wie dies beispielsweise in der EP 0 039 319 B1 vorgesehen ist, nicht abgereinigt wird, weil diesbezügliche Reinigungseinrichtungen in jedem Falle einen erheblichen zusätzlichen Bauaufwand bedeuten, dann kann das verschleppte Produkt dort verkeimen. Im Zuge weiterer planmäßiger oszillatorischer Verschiebebewegungen der Betätigungsstange kann das verkeimte Produkt nunmehr über diese in den produktbeaufschlagten Innenraum zurücktransportiert werden und das dort befindliche einwandfreie Produkt kontaminieren. Man spricht in diesem Falle von einer sog. Rekontamination des Produkts durch Produktverschleppung infolge Fahrstuhleffekt.

In jedem Falle werden die Abdichtungsstellen der vorg. drei Abdichtungsformen im Regelfall in bestimmten Zeitintervallen wenigstens von ihrer produktbeaufschlagten Seite einer automatischen Reinigung im Durchfluss unterzogen (sog. CIP-Reinigung: "cleaning in place" oder zu Deutsch "Reinigung an Ort und Stelle im Durchfluss"). Zur weitergehenden Reinigung einer Stangendichtung zur Beseitigung von Produktverschleppung infolge des Fahrstuhleffekts gibt es eine Vielzahl von Lösungsvorschlägen mittels des vorgenannten Spülschlosses, von denen stellvertretend jene in der EP 0 039 319 B1 bereits erwähnt wurde. Darüber hinaus sei auswahlweise auf die DE 35 24 947 C2 und die DE 38 41 301 C2 verwiesen.

Die Schwachstelle einer Stangenreinigung mittels Spülschloss ist der Fachwelt bekannt und besteht darin, dass die sich auf den Kontaktflächen zwischen der innenraumnahen Stangendichtung und der Betätigungsstange befindlichen Produktmittelreste während des in der Kammer des Spülschlosses durchgeführten Reinigungsvorganges von letzterem nicht erfasst werden können. Diese Produktmittelreste sind besonders kritisch, da die dorthin verschleppten bei den nachfolgenden Schaltvorgängen unmittelbar in den Produktraum rücktransportiert werden und dort zu einer unerwünschten bzw. bei hohen sanitären Ansprüchen zu einer unzulässigen Rekontamination führen können.

Daher wurde bereits vorgeschlagen, während des in der Kammer durchgeführten Reinigungsvorganges die jeweils zugeordnete Stange eine oszillatorische Verschiebebewegung ausführen zu lassen **(**WO92/08070**).** Dieser Vorschlag nutzt die Erkenntnis, dass die Abstreifwirkung einer Stangendichtung nicht hundertprozentig ist, so dass ein sehr dünner der Betätigungsstange anhaftender Reinigungsmittelfilm in den Dichtungsbereich, insbesondere in den Bereich der Kontaktfläche zwischen Dichtung und Betätigungsstange, transportiert wird. Es liegt auf der Hand, dass eine derartige Vorgehensweise bei der Reinigung einer Stangenabdichtung mit hoher Wahrscheinlichkeit unzureichend ist. Außerdem kann diese Vorgehensweise bereits im Ansatz nicht befriedigen, da die Bemühungen des mit der Abdichtung befassten Fachmannes einerseits darauf gerichtet sind, dass die Abdichtwirkung der Stangendichtung nahezu hundertprozentig ist, dass andererseits aber zur Sicherstellung einer ausreichenden Reinigung an der Kontaktfläche zwischen Stangendichtung und Betätigungsstange auf die Ausbildung eines Reinigungsmittelfilmes spekuliert wird.

### Bisherige Lösungsansätze:

1. Zu den Gehäuseabdichtungen der in Rede stehenden Art gibt es bislang keine konstruktive Alternative. Es ist Konsens in der einschlägigen Fachwelt, dass die Einbettung dieser vorgespannten Gehäusedichtungen so zu erfolgen hat, dass dynamische Kräfte über die im unmittelbaren Kontakt befindlichen beteiligten, dichtungsnutbildenden Gehäuseteile aufgenommen werden und nicht zu einer dynamischen Verformung der Gehäusedichtung in Form eines sog. "Atmens" führen dürfen. Ein Atmen der Gehäusedichtung befördert Einsaugen von Produkt in die engen Kapillarspalte rund um die Dichtung in der diese aufnehmenden Dichtungsnut.
2. Solange sich der Fachmann für diskrete Sitzdichtungen in Schließgliedern entscheidet, sind die vorstehend mit Blick auf die Gehäusedichtung angesprochenen Probleme auch uneingeschränkt auf diese Sitzdichtungen und ihre Einbettung im jeweiligen Schließglied übertragbar. Da aber dynamische Kraftwirkungen von der Sitzfläche auf die Sitzdichtung unabdingbar sind, weil sie den Wirkmechanismus der Sitzdichtung erst bedingen, sind hier die unvermeidbaren, die Sitzdichtung umgebenden Spalte besonders kritisch. Zur Problemlösung sind heute im Wesentlichen zwei Lösungen bekannt, und zwar zum Einen die Verwendung einer sehr maßhaltigen Sitzdichtung (siehe beispielsweise **[1]),** die in eine entsprechend maßhaltige Nut eingepasst ist, und zum Anderen eine mehrteilige Sitzdichtung, wie sie beispielsweise in der EP 1 296 087 B1 beschrieben ist und bei der in der Sitzdichtung ein Stützring mit besonderer Formgebung eingebettet ist, der dafür sorgen soll, dass die Sitzdichtung, insbesondere im kritischen Eingangsbereich des Spaltes zwischen Sitzdichtung und berandender Dichtungsnut, sicher und nachhaltig an die Wandung der Dichtungsnut gepresst wird. Beide Lösungen können bei genauer Betrachtungsweise nicht verhindern, dass die Sitzdichtung unter dynamischen Kräften jedweder Art "atmet" und somit Saugeffekte auftreten können, die ein Eindringen von Produkt in selbst engste Kapillarspalte zumindest begünstigen.
3. Dichtungslose Schließglieder oder Schließglieder, die stoffschlüssig mit Dichtungsmaterial armiert sind, stellen grundsätzlich eine alternative Lösungsmöglichkeit zu Schließgliedern mit diskreten Dichtungen dar und werden vielfach bereits in der Steriltechnik, einem Zweig der Prozesstechnik, in dem die Verfahren zur Herstellung und Verarbeitung von Nahrungsmittelprodukten aseptisch zu führen sind, angewendet. Ein derartiges dichtungsloses Schließglied ist in der Firmendruckschrift **GEA Tuchenhagen, VESTA® Steriltechnik, Fa 657d-04/09,** April 2009 **[2],** beschrieben. Diesen Lösungen sind bislang allerdings konstruktive (ggf. begrenzte Schließkräfte) und materialtechnische (ggf. unbeständig gegen Temperatur und Produkt) Grenzen gesetzt.
4. Bei aseptisch zu führenden Verfahren der Prozesstechnik für Nahrungsmittelprodukte ist es bekannt, eine Stangendichtung der in Rede stehenden Art durch eine Membran oder einen Faltenbalg zu substituieren. Dabei überbrückt beispielsweise in einem Hubventil eine im Wesentlichen ebenflächig ausgebildete Membran (s. beispielsweise DE10 2006 025 653 B4) den Spalt zwischen Gehäuse und Ventilstange, wobei diese Membran an ihren äußeren Rändern im Gehäuse und in der Ventilstange eingespannt ist und dort somit die Funktion einer Gehäusedichtung der vorstehend beschriebenen Art wahrnimmt.

Für ein Hubventil ist ein den jeweiligen Spalt zwischen Ventilstange und Gehäuse überbrückender Faltenbalg aus der DE 196 03 070 B4 bekannt. Der dünnwandige Faltenbalg ist an seinem jeweiligen Ende stoffschlüssig mit dem benachbarten Bauteil, beispielsweise durch Schweißung, verbunden. Dort, wo es sich bei dem benachbarten Bauteil um ein Einspannteil im Gehäuse handelt, ist nunmehr wiederum eine Gehäusedichtung der vorstehend beschriebenen Art erforderlich.

Durch die beiden letztgenannten bekannten Lösungen ist zwar der Fahrstuhleffekt nicht mehr gegeben, die vorstehend beschriebenen Probleme mit Blick auf die Gehäusedichtung im Allgemeinen sind damit aber nicht beseitigt. Die Problematik der Einspannstelle bei Membranen ist in **[2]** thematisiert.

Es ist zunächst nachvollziehbar, dass die Fachwelt in Kenntnis der oben beschriebenen Sachverhalte nach Lösungen sucht, um die Probleme in den vorstehend definierten reinigungskritischen Bereiche der Prozesskomponenten zunächst durch Veränderungen an der jeweiligen Dichtung zu beseitigen oder wenigstens zu entschärfen. Neben konstruktiven Maßnahmen zur Optimierung der Form und des Aufbaus der Dichtungen gibt es Vorschläge, besondere Materialien für diese Dichtungen in Gänze zu verwenden oder deren Oberflächen mit diesen Materialen zu beschichten, wobei diese Materialien Keimbildung und -wachstum in Grenzen verhindern.

So ist es bekannt, bei medizinischer, chirurgischer und orthopädischer Hardware, wie beispielweise Nahtmaterial, Netzen zur Stützung von Köpergewebe, Klammern, Schrauben, Clips, Katheter, Bandagen, Stents, Pfropfen, Kontaktlinsen, intraokulare Linsen, Herzschrittmacher derartige Materialien zur Anwendung zu bringen, wobei es sich dabei um sog. antimikrobielle Materialien oder Beschichtungen handelt **(**WO 2008/144247**)**. Im vorgenannten Falle handelt es sich bei den antimikrobiellen Materialien und Beschichtungen ausdrücklich nicht um Silberverbindungen.

Die antimikrobiellen Eigenschaften der aus geeigneten Silberverbindungen freigesetzten Silberionen sind seit langem bekannt und Hersteller von Lebensmitteln, Kosmetika oder Produkten des täglichen Bedarfs machen sich diese Eigenschaften seit langem zu nutze. In jüngster Zeit werden auch nanoskalige Silberverbindungen (Nanosilber) eingesetzt. Dabei werden die Silberverbindungen auf Nanopartikeln aufgebracht. Nanopartikel sind Teilchen mit einem Durchmesser von weniger als 100 Nanometern (nm), und wegen des sehr großen Oberflächen-Volumen-Verhältnisses können sich die antimikrobiellen Eigenschaften von Silberionen besonders wirksam entfalten. Die Bewertung der mit der Anwendung von Nanosilber verbundenen gesundheitlichen Risiken ist derzeit noch nicht abschließend möglich (siehe **Stellungnahme Nr. 024/2010 des Bundesinstituts für Risikobewertung (BfR)** vom 28.12.2009 **[3]**).

Gleichwohl wird Nanosilber in Thermoplasten und Elastomeren eingesetzt, und zwar wird es entweder auf die Substratoberfläche chemisch oder durch Aufdampfen aufgebracht (Oberflächenausrüstung) oder es wird gleichzeitig mit anderen Füllstoffen in das Substrat eingebunden (eincompoundiert) (siehe hierzu Fachzeitschrift Pharma + Food, Februar 2007, Seiten 34, 35 **[4]**).

Die Verwendung von bioziden Elastomeren, in die Silberverbindungen eincompoundiert sind, für den Einsatz in Beschichtungen, Dichtungen, O-Ringen, Rädern und Rollen, Membranen, Bälge, Emballagen, Auskleidungen, Schläuche und Riemen in Anwendungsbereichen wie Medizintechnik, Pharma und Food, Haushalt, Sport und Freizeit, Bauwesen und Industrie wird in der Fachzeitschrift **KGK Kautschuk Gummi Kunststoffe, 57. Jahrgang, Nr. 9/2004 [5]**, vorgestellt.

Die Firmendruckschrift **Garlock, SEALING TECHNOLOGIES^{®}, Dichtungen für die Pharma-, Lebensmittel- und Milchindustrie, Pharm-D-02/07,** Seite 6 **[6]**, propagiert Dichtungen aus einem Silikon-Elastomer, das durchgehend und homogen mit speziellen Silberionen versetzt ist, für die Anwendung in der Pharma-, Lebensmittel- und Futtermittelindustrie sowie der Medizintechnik und in der Wasseraufbereitung. Bei Verwendung dieser Dichtungen sollen sich keine Bakterien, Pilze und Mikroben an den Kontaktflächen mit diesen Werkstoffen entwickeln können.

Ein Fachbeitrag der **Freudenberg Process Seals GmbH & Co. KG, Viernheim,März 2007, zum Thema "Hochreine Elastomere und konsequentes Hygiene-Design als bessere Lösung" [7]**, der interessanterweise vom Hersteller jener Materialien stammt, der für die Publikation der Literaturstelle **[4]** verantwortlich zeichnet, setzt sich mit den vorg. Lösungsansätzen mit Blick auf Dichtungen aus bioziden Elastomeren, die mit Silberionen versetzt sind, kritisch auseinander und bezweifelt die nachhaltige Wirksamkeit, mit Silberionen im elastomeren Dichtungsmaterial die Bakterien im Umfeld der Dichtung abtöten zu wollen. Dabei wird als Umfeld der Dichtung zum Einen der produktbeaufschlagte Innenraum der Prozesskomponente zwischen den Reinigungszyklen angesehen und zum Anderen aber auch Toträume auf jener Seite der Dichtung, die der produktbeaufschlagten abgewandt sind. Als Argumente, die den kritischen Ansatz stützen sollen, werden angeführt, dass Silberionen ihre bakterizide Wirkung lediglich im Umkreis von 10 mm entfalten könnten und für die Wirkungsentfaltung ein bis eineinhalb Stunden benötigten. Auch seien die Oberflächen der Dichtungen, die mit Silberionen versetzt sind, bezogen auf die Gesamtfläche des vorgenannten Umfeldes, für eine Wirkungsentfaltung viel zu klein. Dies mag sicherlich für den vorgenannten Innenraum der Prozesskomponente zutreffen, wohl weniger für die erwähnten Toträume. Als weiteres Argument gegen die Verwendung von Silberionen wird angeführt, dass die von den Silberionen abgetöteten Mikroorganismen sich als Film auf der Dichtung ablegten, der nicht nur eine Barriere zwischen neu ankommenden Bakterien und den Silberionen im Dichtungsmaterial darstellt, sondern den neu ankommenden Mikroorganismen auch noch als Nahrung diene. Als eher zielführend zur Verhinderung von Keimbildung und -wachstum wird in [**7**] die Verwendung von hochreinen Elastomerwerkstoffen für Dichtungen angesehen, wobei die Dichtungen nach einem konsequenten Hygienic-Design ausgelegt sein sollten.

Der vorstehend diskutierte Stand der Technik zeigt, dass sich die bislang bekannt gewordenen Lösungsansätze zur Beseitigung der von den reinigungskritischen Bereichen der Prozesskomponente ausgehenden Probleme auf konventionelle konstruktive Maßnahmen hinsichtlich Optimierung der Form und des Aufbaus der Dichtung und Ihrer Einbettung in die Nut (maßhaltige Dichtung; mehrteilige Dichtung), auf Dichtungssubstituierung (Membran, Faltenbalg) und die Verwendung biozider Dichtungsmaterialen, insbesondere mit dem Zusatz von Silberverbindungen, beschränken.

Es ist Aufgabe der vorliegenden Erfindung, für Prozesskomponenten der Prozesstechnik für Nahrungsmittelprodukte einen breiteren Lösungsansatz zur Beseitigung der von den reinigungskritischen Bereichen der Prozesskomponente ausgehenden Probleme, als die bisher bekannt gewordenen Lösungsansätze, vorzuschlagen, der uneingeschränkt auf alle in Prozesskomponenten vorkommenden Abdichtungsformen anwendbar ist.

### ZUSAMMENFASSUNG DER ERFINDUNG

Diese Aufgabe wird durch die Verwendung von Materialien in definierten reinigungskritischen Bereichen der Prozesskomponente mit den Merkmalen des unabhängigen Anspruchs 1 gelöst. Vorteilhafte Verwendungsvarianten sind Gegenstand der Unteransprüche. Diese Aufgabe wird weiterhin in definierten reinigungskritischen Bereichen der Prozesskomponente mit den Merkmalen des unabhängigen Anspruchs 6 gelöst. Vorteilhafte Ausführungsformen der Prozesskomponente sind Gegenstand der Unteransprüche.

Der erfinderische Grundgedanke besteht darin, die von den reinigungskritischen Bereichen der Prozesskomponente ausgehenden Probleme im Bereich der diese Bereiche berandenden Wandungen dadurch zu lösen, dass zur Ausrüstung dieser Bereiche ein Material mit biozider oder bakterizider oder antibakterieller oder antimikrobieller Wirkung oder eine Materialkombination, die mehr als ein genanntes Material aufweist, Verwendung findet. Die hauptsächliche Zielrichtung liegt im Rahmen der Erfindung auf der Ausrüstung der die jeweilige Dichtung berandenden Wandungen sowie auf der entsprechenden Ausrüstung der Wandungen eines Hohlraums, der sich ggf. der jeweiligen Dichtung auf deren vom Nahrungsmittelprodukt abgewandten Seite anschließt.

Dies schließt eine entsprechende Behandlung und Ausrüstung der jeweils eingesetzten Dichtung im bisher bekannten Umfang nicht aus. Die erfinderische Lösung bezieht auch ausdrücklich in die genannten Materialien Silber, verschiedene Silbersalze sowie Silber in mikrokristalliner oder in nanopartikulärer Form sowie an Nanopartikel gekoppeltes Silber mit ein und beschränkt sich keinesfalls auf diese genannten Materialien.

Dabei umfasst die erfinderische Lösung im Wesentlichen und mindestens sechs mögliche reinigungskritische Bereiche der Prozesskomponenten, und zwar
- einen ersten Bereich, der das Umfeld einer produktbeaufschlagten, statisch wirkenden Gehäusedichtung definiert,
- einen zweiten Bereich, der das Umfeld einer produktbeaufschlagten, dynamisch wirkenden Stangendichtung definiert,
- einen dritten Bereich, der das Umfeld einer produktbeaufschlagten Sitzdichtung definiert, die im Druckeingriff mit einer zugeordneten Sitzfläche steht,
- einen vierten Bereich, der das Umfeld einer produktbeaufschlagten Sitzdichtung definiert, die im Druck- und Gleiteingriff mit einer zugeordneten Sitzfläche steht,
- einen fünften Bereich, der das Umfeld einer produktbeaufschlagten Sitzdichtung definiert, die im Gleiteingriff mit einer zugeordneten Sitzfläche steht und
- einen sechsten Bereich, der einen kritischen Hohlraum definiert, der sich an die dem Nahrungsmittelprodukt abgewandte Seite der Gehäuse- oder der Stangendichtung anschließt.

Die erfinderische Lösung umfasst weiterhin zwei alternativ zur Verfügung stehende Ausrüstungen der genannten kritischen Bereiche. Ein erster Vorschlag sieht vor, dass die jeweilige Oberfläche der Wandungen der kritischen Bereiche mit dem erfindungsgemäßen Material oder der Materialkombination beschichtet ist. Diese Beschichtung kann beispielsweise durch entsprechende chemische Behandlung der Oberfläche oder durch Aufdampfen des Materials oder der Materialkombination auf die Oberfläche erfolgen.

Ein zweiter Vorschlag sieht vor, dass die gesamte Wandstärke der jeweiligen Wandung des genannten kritischen Bereichs homogen mit dem Material oder der Materialkombination versetzt oder homogen aus dem Material oder der Materialkombination beschaffen ist. Diese Lösung setzt voraus, dass in den Konstruktionswerkstoff für die kritischen Bereiche das Material oder die Materialkombination homogen eingebunden (eincompoundiert) werden kann oder dass der jeweilige Konstruktionswerkstoff in Gänze homogen aus diesem Material oder dieser Materialkombination beschaffen ist.

Ein weiterer Vorschlag sieht vor, dass der bewegte Teil gegenüber der zweiten Dichtung, der Stangendichtung, eine oszillierende translatorische oder eine oszillierende rotative oder eine kontinuierliche oder an- und abschwellende rotative Bewegung in einer Drehrichtung ausführt. Damit sind von der Erfindung Abdichtungen für alle bekannten kinematischen Bewegungsformen von Betätigungsstangen in Prozesskomponenten umfasst.

Ein weiterer Vorschlag sieht vor, dass der die Sitzdichtung aufweisende bewegte Teil eine oszillierende translatorische oder eine oszillierende rotative oder eine kontinuierliche oder an- und abschwellende rotative Bewegung in einer Drehrichtung ausführt. Damit sind von der Erfindung alle in Prozesskomponenten bekannten Schließglieder und deren bekannte kinematische Bewegungsformen umfasst. Dabei handelt es sich zum Einen um Schließglieder, die eine translatorische Hubbewegung ausführen, wobei die auf dem jeweiligen Schließglied angeordnete Sitzdichtung gegenüber einer axial orientierten Sitzfläche im sog. Druckeingriff, gegenüber einer axial/radial (z.B. kegelförmig) orientierten Sitzfläche im sog. Druck- und Gleiteingriff und gegenüber einer radial orientierten Sitzfläche (beispielsweise Schieberkolben in einer zylindrischen Sitzfläche) im sog. Gleiteingriff steht. Dabei handelt es sich aber auch zum Anderen um Schließglieder, die eine rotierende Bewegung ausführen, beispielsweise um scheibenförmige Schließglieder, die an ihrer äußeren Mantelfläche oder an einer stirnseitig angeordneten Ringfläche abdichten, oder um zylinder-, kegel- oder kugelförmige Schließglieder, die an ihrer Mantel- oder Kugelfläche abdichten.

Die erfindungsgemäße Lösung lässt sich, wie dies ein weiterer Vorschlag vorsieht, in besonders vorteilhafter Weise auf eine Prozesskomponente anwenden, die als ein Hubventil in Form eines Einsitzventils oder eines Doppelsitzventils oder eines Doppeldichtventils oder eines Regelventils mit Regelkegel ausgebildet ist.

Die erfindungsgemäße Lösung findet aber auch, wie dies ebenfalls vorgeschlagen wird, in besonders vorteilhafter Weise auf eine Prozesskomponente Anwendung, die als ein Scheiben- oder Klappenventil in Form eines Einscheibenventils oder eines leckagegesicherten Einscheibenventils oder eines Doppelscheibenventils ausgeführt ist.

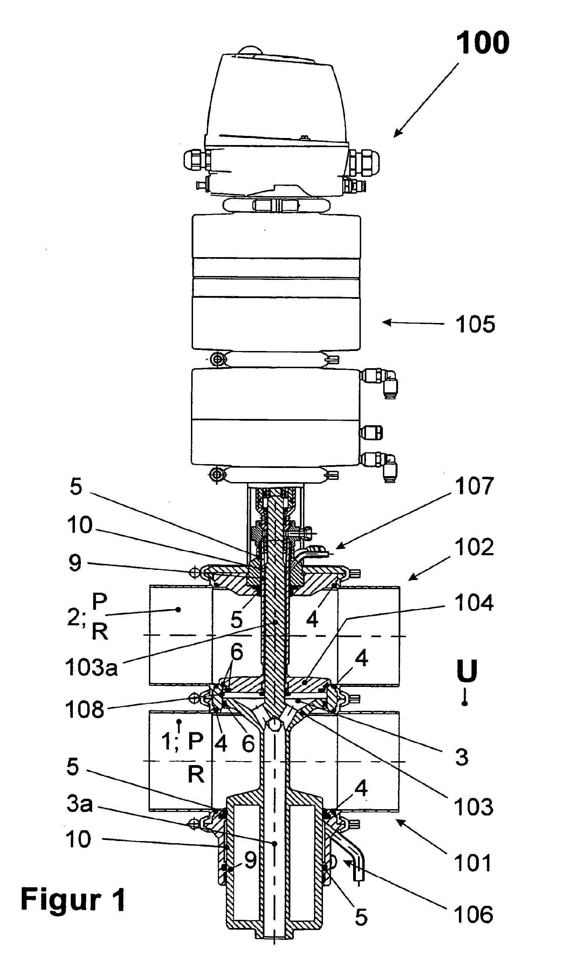

Eine eingehendere Darstellung der Erfindung ergibt sich aus der folgenden Beschreibung und den beigefügten Figuren der Zeichnung sowie aus den Ansprüchen. Während die Erfindung in den verschiedensten Verwendungsvarianten und Ausführungsformen einer Prozesskomponente realisiert ist, werden in der Zeichnung an einer beispielhaft ausgewählten Prozesskomponente, die als Doppelsitzventil ausgebildet ist, sechs reinigungskritische Bereiche, die auch für andere Prozesskomponenten typisch sind, dargestellt und nachfolgend nach Aufbau und ihrer Ausrüstung mit dem erfindungsgemäßen Material oder der Materialkombination beschrieben. Es zeigen
- **Figur 1**: im unteren Bereich der Darstellung im Mittelschnitt und im oberen Bereich in Ansicht eine Prozesskomponente in Form eines Dop-pelsitzventils, in dessen reinigungskritischen Bereichen die Erfin-dung Anwendung findet;

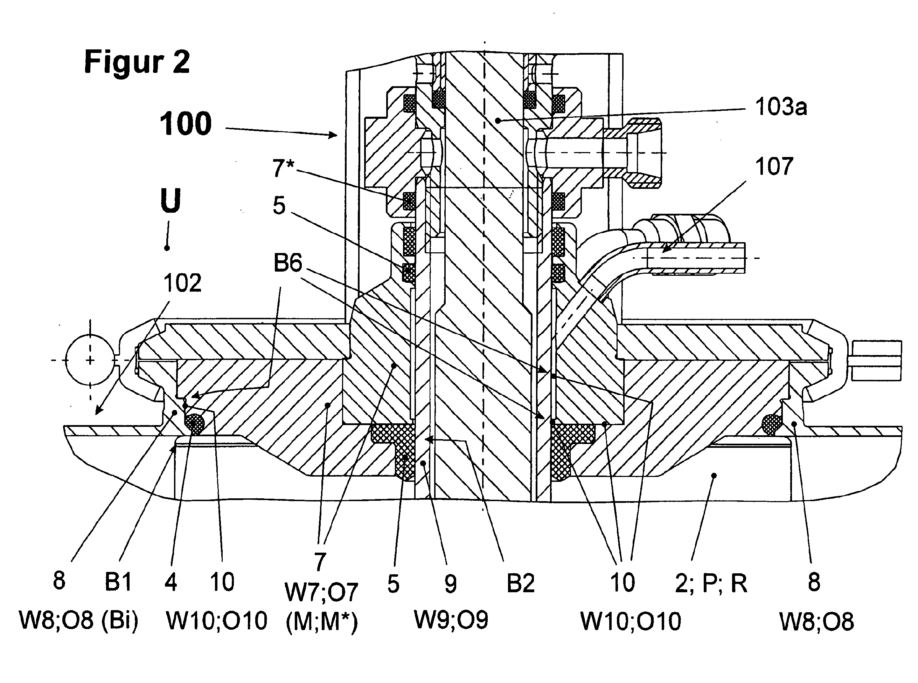

- **Figur 2**: in vergrößerter Darstellung einen Ausschnitt aus dem oberen Be-reich des Mittelschnitts gemäß **Figur 1**, in dem ein reinigungskriti-scher erster Bereich mit einer Gehäusedichtung, ein reinigungskri-tischer zweiter Bereich mit einer Stangendichtung sowie reini-gungskritische sechste Bereiche mit jeweils einem Hohlraum enthalten sind;

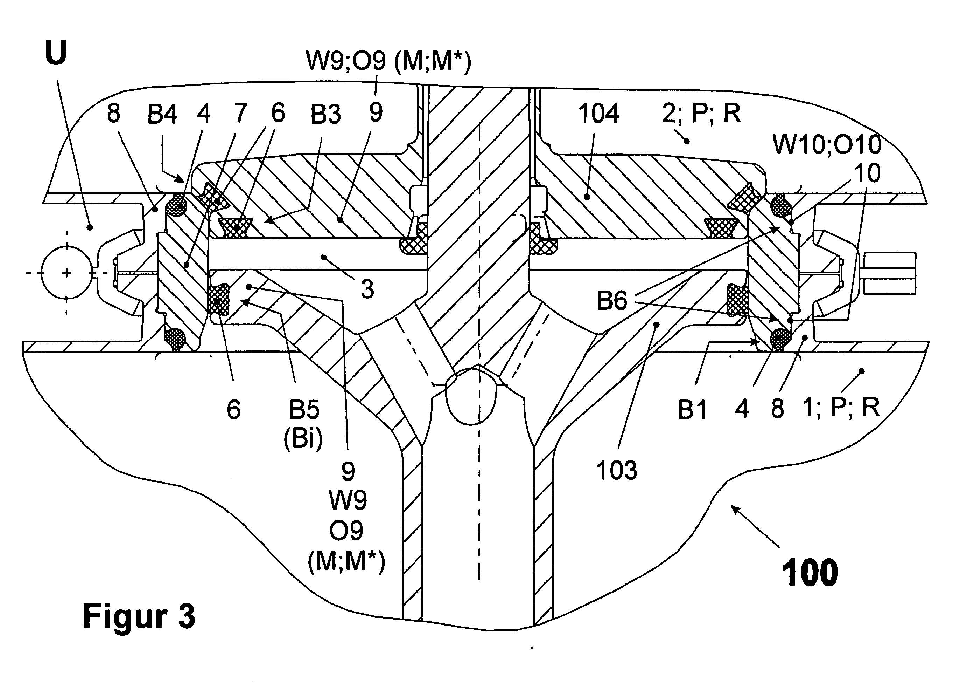

- **Figur 3**: in vergrößerter Darstellung einen Ausschnitt aus dem mittleren Bereich des Mittelschnitts gemäß **Figur 1**, in dem ein reinigungs-kritischer dritter, vierter und fünfter Bereich mit jeweils einer Sitz- dichtung sowie reinigungskritische sechste Bereiche mit jeweils einem Hohlraum enthalten sind und

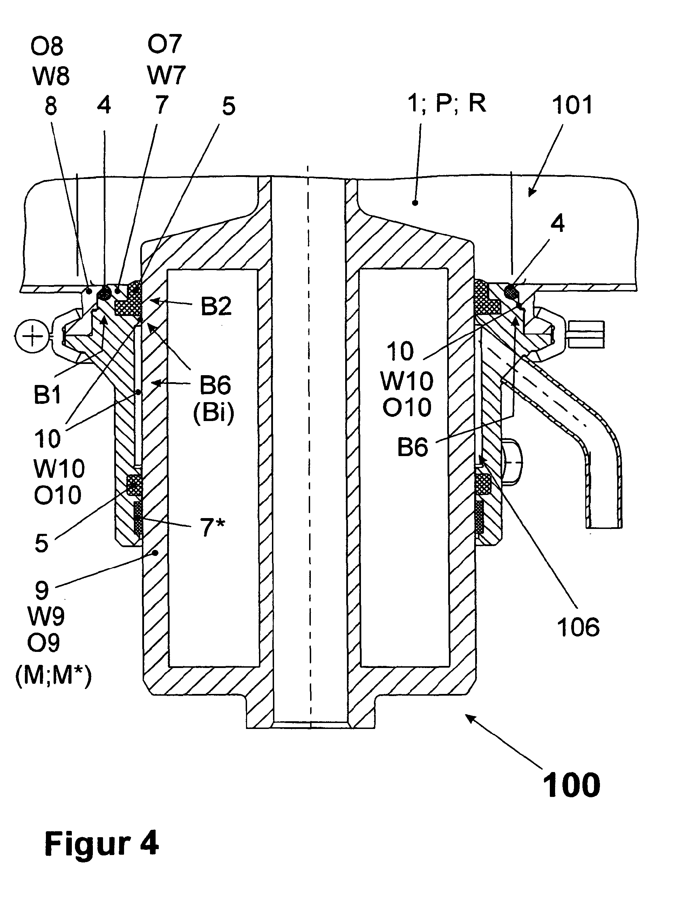

- **Figur 4**: in vergrößerter Darstellung einen Ausschnitt aus dem unteren Be-reich des Mittelschnitts gemäß **Figur 1**, in dem ein reinigungskriti-scher erster Bereich mit einer Gehäusedichtung, ein reinigungskri-tischer zweiter Bereich mit einer Stangendichtung sowie reini-gungskritische sechste Bereiche mit jeweils einem Hohlraum enthalten sind.

### DETAILLIERTE BESCHREIBUNG

Eine als Doppelsitzventil ausgebildete Prozesskomponente 100 der Prozesstechnik für Nahrungsmittelprodukte P (**Figur 1**), die geeignet ist, dieses Nahrungsmittelprodukt P in einem ersten Gehäuse 101 und/oder in einem zweiten Gehäuse 102 zu führen und dort gegenüber dem jeweils anderen Gehäuse 102, 101 sicher abzusperren, besitzt ein erstes, unabhängig angetriebenes Schließglied103 und ein zweites, abhängig angetriebenes Schließglied 104, die in einer die Gehäuse 101, 102 miteinander verbindende Verbindungsöffnung 108 gegen eine jeweils zugeordnete Sitzfläche dichten. Das Doppelsitzventil 100 ist auch geeignet, um ein Nahrungsmittelprodukt P in einem der Gehäuse 101, 102 zu führen und in dem jeweils anderen ein Reinigungsmittel R zu bevorraten. Die sicherere Trennung der beiden sog. feindlichen Flüssigkeiten gelingt über die beiden in Reihe geschalteten Schließglieder 103, 104, die zwischen sich einen Leckagehohlraum 3 einschließen, der über mindestens einen Verbindungsweg 3a mit der Umgebung U des Doppelsitzventils 100 verbunden ist. Der Verbindungsweg 3a verläuft in einem, bezogen auf die Darstellungslage, am unteren, ersten Schließglied 103 angeordneten, nicht bezeichneten Rohr, das nach unten durch das erste Gehäuse 101 hindurch- und aus diesem abgedichtet herausgeführt ist, wobei sich das Rohr in seinem Durchdringungsbereich mit dem ersten Gehäuse 101 auf einen sogenannten Druckausgleichskolben 9 erweitert. Die Abdichtung des letzteren im ersten Gehäuse 101 erfolgt über zwei im axialen Abstand voneinander angeordnete zweite Dichtungen 5, die auch als dynamisch wirkende Stangendichtungen bezeichnet werden und die in axialer Richtung zwischen sich und in radialer Richtung zwischen dem ersten Gehäuse 101 und dem Druckausgleichskolben 9 einen Hohlraum 10 ausbilden. Dieser Hohlraum 10 ist mit einem Ein- und Austritt für Reinigungsflüssigkeit R versehen und wird auch als erstes Spülschloss 106 bezeichnet.

Das als Schieberkolben ausgebildete erste Schließglied 103 ist in der als zylinderförmige Sitzfläche ausgebildeten Verbindungsöffnung 108 über eine Sitzdichtung 6 dichtend geführt, wobei die Sitzdichtung 6 gegenüber der zugeordneten Sitzfläche radial im sogenannten Gleiteingriff dichtet. Ein Antrieb 105 bewegt im Zuge der Öffnungsbewegung des Doppelsitzventils 100 das erste Schließglied 103 nach oben, bis es an einer weiteren Sitzdichtung 6 im zweiten Schließglied 104 dichtend zur Anlage gelangt und letzteres bei seinem weiteren Öffnungshub gleichfalls in eine Offenstellung überführt. Die Sitzdichtung 6 im zweiten Schließglied 104 dichtet axial gegenüber seiner zugeordneten Sitzfläche am ersten Schließglied 103 im sogenannten Druckeingriff. Im zweiten Schließglied 104 ist oberhalb der vorstehend genannten eine weitere Sitzdichtung 6 angeordnet, die gegenüber der zugeordneten gehäuseseitigen Sitzfläche, einer kegelförmigen Erweiterung am oberen Ende der Verbindungsöffnung 108, axial/radial im sogenannten Druck-/Gleiteingriff dichtet.

Zwei Stangen 103a, 9 der Schließglieder 103, 104, die innere, erste Stange 103a und die diese konzentrisch umschließende Hohlstange 9 sind nach oben durch das zweite Gehäuse 2 hindurch- und aus diesem herausgeführt und enden in dem Antrieb 105. Über diesen Antrieb 105 wird mit einer Hauptverstelleinrichtung der Öffnungs- und Schließhub des Doppelsitzventils 100 generiert, und es wird darüber hinaus über Einzelverstelleinrichtungen eine jeweilige Teiloffenstellung des einen oder des anderen Schließgliedes 103, 104 zum Zwecke einer sog. Sitzreinigung erzeugt. Diese Sitzreinigungen können dann durchgeführt werden, wenn in einem Gehäuse 101, 102 Nahrungsmittelprodukt P ansteht, während in dem anderen Gehäuse 102, 1011 Reinigungsflüssigkeit R vorgehalten wird. In diesem Falle wird das von der Reinigungsflüssigkeit R beaufschlagte Schließglied 104, 103 spaltweit von seiner zugeordneten Sitzfläche angehoben, während das vom Nahrungsmittelprodukt P beaufschlagte Schließglied 103, 104 in seiner Schließstellung verbleibt. Die aus dem Gehäuse 102, 101 zugeführte Reinigungsflüssigkeit R reinigt die jeweils freigelegte Sitzfläche, um dann über den Leckagehohlraum 3 und den Verbindungsweg 3a in die Umgebung U abzufließen.

Die Abdichtung der Hohlstange 9 des oberen, zweiten Schließgliedes 104 im zweiten Gehäuse 102 erfolgt über zwei im axialen Abstand voneinander angeordnete zweite Dichtungen 5, die auch als dynamisch wirkende Stangendichtungen bezeichnet werden und die in axialer Richtung zwischen sich und in radialer Richtung zwischen dem zweiten Gehäuse 102 und der Hohlstange 9 einen Hohlraum 10 ausbilden. Dieser Hohlraum 10 ist mit einem Ein- und Austritt für Reinigungsflüssigkeit R versehen und wird auch als zweites Spülschloss 107 bezeichnet.

Das erste Gehäuse 101 bildet innenseits einen ersten Innenraum 1 und das zweite Gehäuse 102 bildet innenseits einen zweiten Innenraum 2 aus, in denen jeweils das Nahrungsmittelprodukt P oder auch jeweils die Reinigungsflüssigkeit R anstehen kann oder es liegen, wie vorstehend beschrieben, feindliche Flüssigkeiten in den Innenräumen 1, 2 vor. In allen diesen Fällen sorgt jeweils eine erste Dichtung 4, die auch als statisch wirkende Gehäusedichtung bezeichnet wird, für eine sichere Abdichtung des Innenraumes 1, 2 gegenüber der Umgebung U.

Die **Figur 2** zeigt einen reinigungskritischen ersten Bereich B1 der als Doppelsitzventil ausgebildeten Prozesskomponente 100, in dem die statisch wirkende erste Dichtung 4, die Gehäusedichtung, angeordnet ist. Eine erste Wandung W7 eines ersten Gehäuseteils 7 und eine zweite Wandung W8 eines zweiten Gehäuseteils 8 begrenzen die erste Dichtung 4 fast vollständig bis auf einen sich in den zweiten Innenraum 2 auswulstenden, produktbeaufschlagten Teil, wobei im Falle einer im zweiten Innenraum 2 anstehenden Reinigungsflüssigkeit R dieser Teil dann von der Reinigungsflüssigkeit R beaufschlagt ist. Die Wandungen W7, W8 sind relativ zur ersten Dichtung 4 unbeweglich und sie bilden zwischen sich und der ersten Dichtung 4 zumindest Kapillarspalte aus. Die voneinander lösbaren Gehäuseteile 7, 8 sind auf der dem zweiten Innenraum 2 abgewandten Seite der ersten Dichtung 4 mit mehr oder weniger großem Fügespiel ineinander gefügt, wobei dadurch an der Fügestelle zwangsläufig ein kritischer Hohlraum 10 gebildet wird. Dieser Hohlraum 10 ist von vierten Wandungen W10 begrenzt und bildet einen reinigungskritischen sechsten Bereich B6 der als Doppelsitzventil ausgebildeten Prozesskomponente 100.

In **Figur 2** ist weiterhin ein reinigungskritischer zweiter Bereich B2 der Prozesskomponente 100 gezeigt, in dem die dynamisch wirkende zweite Dichtung 5, die Stangendichtung, angeordnet ist. Eine erste Wandung W7 eines ersten Gehäuseteils 7 und eine dritte Wandung W9 eines gegenüber dem ersten Gehäuseteil 7 bewegten Teils 9, im vorliegenden Falle die mit dem zweiten Schließglied 104 verbundene Hohlstange, begrenzen die zweite Dichtung 5 fast vollständig bis auf einen sich dem zweiten Innenraum 2 darbietenden und ggf. sich dorthin auswulstenden, produktbeaufschlagten Teil, wobei im Falle einer im zweiten Innenraum 2 anstehenden Reinigungsflüssigkeit R dieser Teil dann von der Reinigungsflüssigkeit R beaufschlagt ist.

Die erste Wandung W7 ist relativ zur zweiten Dichtung 5 unbeweglich und die vierte Wandung 9 ist relativ zur zweiten Dichtung 5 beweglich. Die erste Wandung W7 bildet zwischen sich und der zweiten Dichtung 5 zumindest Kapillarspalte aus, während im Spalt zwischen der zweiten Dichtung 5 und der bewegten vierten Wandung 9 wegen der nicht hundertprozentigen Abstreifwirkung der zweiten Dichtung 5 der vorstehend beschriebene Fahrstuhleffekt wirksam sein kann. Die gegenüber dem ersten Gehäuseteil 7 bewegliche Hohlstange 9 bildet zwischen sich und dem ersten Gehäuseteil 7 auf der dem zweiten Innenraum 2 abgewandten Seite der zweiten Dichtung 5 zwangsläufig einen kritischen Hohlraum 10 aus, der, falls er mit einer Reinigungsflüssigkeit im Rahmen der Ausbildung eines sog. Spülschlosses 107 spülbar sein soll, an seinem anderen Ende über eine weitere zweite Dichtung 5, ebenfalls eine Stangendichtung, zur Umgebung U hin abgedichtet ist. Ein weiterer Hohlraum 10 wird auf der dem zweiten Innenraum 2 abgewandten Seite der zweiten Dichtung 5 zwischen Teilen des ggf. geteilten ersten Gehäuseteil 7 gebildet. Diese Hohlräume 10 sind jeweils von vierten Wandungen W10 begrenzt und bilden jeweils einen reinigungskritischen sechsten Bereich B6 der als Doppelsitzventil ausgebildeten Prozesskomponente 100. Besonders reinigungskritisch ist der sechste Bereich B6 zwischen Hohlstange 9 und erstem Gehäuseteil 7, wenn auf die obere zweite Dichtung 5 und damit auf die Ausbildung eines Spülschlosses 107 verzichtet wird.

An der Durchdringungsstelle des Druckausgleichskolbens 9 (bewegter Teil) durch das erste Gehäuse 101 (**Figur 4**) liegen hinsichtlich der reinigungskritischen Bereich B1, B2 und B6 im Umfeld einer statisch wirkenden ersten Dichtung 4 (Gehäusedichtung), im Umfeld einer dynamisch wirkenden zweiten Dichtung 5 (Stangendichtung) und im Umfeld eines kritischen Hohlraumes 10 adäquat die gleichen Verhältnisse bezüglich Anordnung und Wirkungsweise der in Frage kommenden weiteren Bauteile vor, wie an der in **Figur 2** dargestellten und bereits vorstehend beschriebenen Durchdringungsstelle der mit dem zweiten Schließglied 104 verbundenen Hohlstange 9 durch das zweite Gehäuse 101. Bei den weiteren Bauteilen handelt es sich um ein erstes und ein zweites Gehäuseteil 7, 8 und die jeweils zugeordneten Wandungen W7, W8 und die Wandungen W10 des Hohlraums 10. Auf eine diesbezügliche Beschreibung wird daher an dieser Stelle verzichtet.

Die Erfindung setzt an den in den **Figuren 2** und **4** genannten und beschriebenen reinigungskritischen Bereichen B1, B2 und B6, allgemein mit Bi bezeichnet, an, wobei die Wandungen W7, W8, W9 und W10 wenigstens eines Bereichs Bi der reinigungskritischen Bereiche B1, B2 und B6 eine Ausrüstung mit einem Material M mit biozider M1 oder bakterizider M2 oder antibakterieller M3 oder antimikrobieller Wirkung M4 oder einer Materialkombination M*, die mehr als ein genanntes Material M1, M2, M3, M4 aufweist, erhalten. Die vorliegende Erfindung definiert am Beispiel einer als Doppelsitzventil ausgebildeten Prozesskomponente 100 sechs reinigungskritische Bereiche B1 bis B6, wobei im allgemeinsten Falle Bi Bereiche mit i = 1 bis n vorliegen können.

Dabei sind gemäß einer ersten Ausgestaltungsform eine erste Oberfläche 07 der ersten Wandung W7, eine zweite Oberfläche 08 der zweiten Wandung W8, eine dritte Oberfläche 09 der dritten Wandung W9 und eine vierte Oberfläche O10 der vierten Wandung W10 jeweils mit dem Material M oder der Materialkombination M* beschichtet **(****Figuren 2****,** **4****).**

Eine zweite Ausgestaltungsform sieht vor, dass die gesamte Wandstärke der jeweiligen Wandung W7, W8, W9, W10 homogen mit dem Material M oder der Materialkombination M* versetzt oder homogen aus dem Material M oder der Materialkombination M* beschaffen ist (**Figuren 2****,** **4**).

Der als Hohlstange (**Figur 2**) oder als Druckausgleichskolben (**Figur 4**) ausgebildete bewegte Teil 9 führt bei einer als Doppelsitzventil ausgebildeten Prozesskomponente 100 eine oszillierende translatorische Bewegung aus, die sich synchron mit dem Öffnungs- und Schließhub des ersten und des zweiten Schließgliedes 103, 104 vollzieht. Falls bei einem Doppelsitzventil 100 auf einen Druckausgleichskolben 9 in Verbindung mit dem unteren, ersten Schließglied 103 verzichtet wird, was auch sehr häufig der Fall ist, so reduziert sich dieser mit dem ersten Schließglied 103 verbundene, den Verbindungsweg 3a notwendigerweise aufnehmende Teil auf einen Rohrschaft, wie er sich in **Figur 4** innenseits des Druckausgleichskolbens 9 darstellt.

Die vorliegende Erfindung betrifft allerdings in ihrer breitesten Anwendung alle bewegten Teile 9, beispielsweise Verstellstangen, Wellen, Achsen, Lagerzapfen in Prozesskomponenten 100, die durch Gehäuse der Prozesskomponente 100 hindurchgeführt oder in diesen gelagert sind und sich dabei relativ zur zweiten Dichtung 5 oszillierend translatorisch oder oszillierend rotativ oder kontinuierlich oder an- und abschwellend rotativ in einer Drehrichtung bewegen. Als Beispiel für eine diesbezügliche oszillierende rotative Bewegung sei hier die Antriebsstange für das scheibenförmige Schließglied eines Scheiben- oder Klappenventils angeführt. Als Beispiel für eine rotative Bewegung im vorstehenden Sinne sei eine Welle oder ein Lagerzapfen einer rotierend arbeitenden Pumpe genannt.

Schließglieder 103, 104 in einem Doppelsitzventil 100 sind bewegte Teile 9 in einer Prozesskomponente 100 im Sinne der Erfindung (**Figur 3**). Sie nehmen in eigens dafür vorgesehenen Dichtungsnuten Sitzdichtungen 6 auf, wenn sie mit den selbigen diskret ausgestattet sind. In Sonderfällen können Schließglieder auch dichtungslos oder selbstdichtend ausgeführt sein; diese Fälle sind nicht Gegenstand der vorliegenden Erfindung. Die Sitzdichtungen 6 bilden mit den dritten Wandungen W9 ihrer sie jeweils aufnehmenden Dichtungsnut mindestens Kapillarspalte, wenn sie an diesen dritten Wandungen W9 lückenlos anliegen. Oftmals liegen die Sitzdichtungen 6 aber nicht überall lückenlos an, und es bilden sich dann dort, wo kein Kontakt mit der dritten Wandung W9 unter Vorspannung existiert, Kavernen oder umlaufende, in sich geschlossene Ringräume.

Beim Doppelsitzventil gemäß **Figur 3** ist das unten liegende, erste Schließglied 103 als Schieberkolben mit einer radial wirkenden Sitzdichtung 6 ausgebildet, die temporär im Gleiteingriff mit einer zugeordneten zylindrischen Sitzfläche steht. Die Sitzdichtung 6 ist an ihrem aus der Dichtungsnut herausragenden Endabschnitt produktbeaufschlagt und sie ist relativ zum bewegten Teil 9 in diesem unter Vorspannung unbeweglich angeordnet. In ihrer Abdichtstellung in der zugeordneten zylindrischen Sitzfläche im ersten Gehäuseteil 7 besteht eine notwendige Anpressung der Sitzdichtung 6 an ihrer Sitzfläche und damit eine auf die Sitzdichtung 6 in radialer Richtung zusätzlich zur Vorspannkraft wirkende Dichtkraft, die zu einer Verformung der Sitzdichtung 6 vor allem im aus der Dichtungsnut herausragenden Teil führt. Diese Dichtkraft geht beim Herausfahren der Sitzdichtung 6 aus der Sitzfläche im Zuge des Öffnungshubes wieder vollständig verloren. Die derart im Zuge sich wiederholender Öffnungs- und Schließhübe verformende und damit "atmende" Sitzdichtung 6 kann über die Eintrittsbereiche der sie umschließenden engen Spalte oder Kapillarspalte zwischen Sitzdichtung 6 und vierten Wandungen W9 Nahrungsmittelprodukt P aus dem Innenraum 1 ansaugen und dadurch hinterwandert werden. Nahrungsmittelprodukt P in diesen hinterwanderten Bereichen, die als reinigungskritischer fünfter Bereich B5 gekennzeichnet sind, ist im Zuge der vorstehend erwähnten Durchflussreinigung (CIP-Reinigung) nur schwer oder gar nicht zu erreichen und abzureinigen.

Das oben liegende, zweite Schließglied 104 verfügt auf seiner Unterseite über eine als sog. Mitteldichtung ausgebildete, axial wirkende Sitzdichtung 6, die temporär im Druckeingriff mit der oberen ringförmigen Stirnfläche des ersten Schließgliedes 103, die ihm als Sitzfläche dient, steht. Auch diese Sitzdichtung 6 ist begrenzt produktbeaufschlagt, da aus Nahrungsmittelprodukt P bestehende Schaltleckagen beim Einfahren der beiden Schließglieder 103, 104 in die Schließstellung oder Leckagen durch Dichtungsdefekte auf ihrem jeweiligen Ableitungsweg in den Leckagehohlraum 3 die in Rede stehenden Sitzdichtung 6 zwangsläufig beaufschlagen werden.

Das oben liegende, zweite Schließglied 104 verfügt oberhalb der als Mitteldichtung ausgebildeten Sitzdichtung 6 über eine weitere Sitzdichtung 6, die gegenüber einer zugeordneten kegelförmigen Sitzfläche axial/radial wirkt und mit dieser Sitzfläche im temporären im Druck-/Gleiteingriff steht.

Für die beiden Sitzdichtungen 6 im zweiten Schließglied 104, dem bewegten Teil 9, gilt hinsichtlich der jeweiligen Vorspannkraft in der zugeordneten Dichtungsnut, der jeweiligen Dichtkraft in der Abdichtungsstellung, des Vorgangs des "Atmens" im Zuge sich wiederholender Öffnungs- und Schließhübe und der jeweiligen Hinterwanderung das Gleiche wie das, was bezüglich der Sitzdichtung 6 im ersten Schließglied 103 vorstehend bereits thematisiert wurde. Nahrungsmittelprodukt P in diesen hinterwanderten Bereichen, die bezüglich der als Mitteldichtung ausgebildeten Sitzdichtung 6 als reinigungskritischer dritter Bereich B3 und der darüber liegenden weiteren Sitzdichtung 6 als reinigungskritischer vierter Bereich B4 gekennzeichnet sind, ist im Zuge der vorstehend erwähnten Durchflussreinigung (CIP-Reinigung) ebenfalls nur schwer oder gar nicht zu erreichen und abzureinigen. Auf diesbezügliche Wiederholungen wird daher an dieser Stelle verzichtet.

Die Erfindung setzt nun weiterhin in den in **Figur 3** genannten und beschriebenen reinigungskritischen Bereichen B3, B4 und B5, allgemein mit Bi bezeichnet, an, wobei die Wandungen W9 wenigstens eines Bereichs Bi der reinigungskritischen Bereiche B3 bis B5 eine Ausrüstung mit einem Material M mit biozider M1 oder bakterizider M2 oder antibakterieller M3 oder antimikrobieller Wirkung M4 oder einer Materialkombination M*, die mehr als ein genanntes Material M1, M2, M3, M4 aufweist, erhalten.

Dabei sind gemäß einer ersten Ausgestaltungsform eine dritte Oberfläche 09 der dritten Wandung W9 und vierte Oberflächen O10 der vierten Wandungen W10 der kritischen Hohlräume 10 mit dem Material M oder der Materialkombination M* beschichtet.

Eine zweite Ausgestaltungsform sieht vor, dass die gesamte Wandstärke der jeweiligen Wandung W9, W10 homogen mit dem Material M oder der Materialkombination M* versetzt oder homogen aus dem Material M oder der Materialkombination M* beschaffen ist.

Die als Schließglieder 103, 104 ausgebildeten bewegten Teile 9 führen bei einer als Doppelsitzventil ausgebildeten Prozesskomponente 100 eine oszillierende translatorische Bewegung aus. Die vorliegende Erfindung betrifft allerdings in ihrer breitesten Anwendung alle bewegten Teile 9 in der Form von Schließgliedern, wenn diese einen zugeordneten Strömungsweg in der Prozesskomponente 100 wahlweise unter Verwendung einer Sitzdichtung 6 verschließen. Dabei vollziehen die als Schließglieder fungierenden Teile 9 mit ihrer jeweiligen Sitzdichtung 6 entweder, wie vorstehend dargestellt, relativ zur zugeordneten Sitzfläche eine oszillierende translatorische Bewegung oder aber, dies ist am Ausführungsbeispiel nicht zu zeigen, eine oszillierende rotative Bewegung oder eine in einer Drehrichtung sich vollziehende kontinuierliche oder eine auf- und abschwellende rotative Bewegung. Als Beispiel für diesbezügliche oszillierende oder in eine Drehrichtung sich vollziehende rotative Bewegungen im vorstehend genannten Umfang seien hier Drehschieber mit einer Schließgliedfunktion angeführt.

Die vorliegende Erfindung wurde am Beispiel einer als Doppelsitzventil ausgebildeten Prozesskomponente 100 erläutert. Die erfindungsgemäße Lösung soll sich aber insbesondere auch auf andere Hubventile erstrecken, wie beispielsweise ein Einsitzventil, ein Doppeldichtventil, bei dem auf einem als Schieberkolben ausgebildeten Schließglied zwei axial beabstandete Sitzdichtungen angeordnet sind, die jeweils auf einer zugeordneten zylindrischen Sitzfläche radial im Gleiteingriff abdichten, oder ein Regelventil mit Regelkegel. Des weiteren findet die vorliegende Erfindung insbesondere Anwendung auf eine Prozesskomponente 100, die als Scheiben- oder Klappenventil in Form eines Einscheibenventils oder eines leckagegesicherten Einscheibenventils, das auf der Mantelfläche seiner als Schließglied fungierenden Scheibe zwei axial beabstandete Abdichtungsstellen aufweist, zwischen denen ein umlaufender Ringraum angeordnet ist, oder eines Doppelscheibenventils, das zwei voneinander getrennte und axial voneinander beabstandete, als Schließglieder fungierende Scheiben aufweist, ausgebildet ist.

Der in Form einer Stange, einer Hohlstange oder eines Druckausgleichskolbens ausgebildete bewegte Teil 9 einer Prozesskomponente 100 wird zwar gegenüber dem ersten Gehäuseteil 7 durch die dynamisch wirkende zweite Dichtung 5 abgedichtet, er wird aber durch diese nicht geführt. Die Führung übernimmt entweder der erste Gehäuseteil 7 selbst oder, und dies ist die bevorzugte Lösung, die Führung erfolgt über wenigstens eine Führungsbuchse 7*, die form- und/oder kraftschlüssig im ersten Gehäuseteil 7 eingebettet ist (s. **Figuren 2** und **4**). Diese Lösung ist immer dann angeraten, wenn der bewegte Teil 9 und der diesen führende erste Gehäuseteil 7 aus dem gleichem Material und in gleicher Modifikation vorliegen und hier unter diesen Bedingungen die Neigung zum "Fressen" der miteinander in Kontakt tretenden Teile 7, 9 besteht. Eine diesbezügliche Führungsbuchse 7* ist daher mit Blick auf ihre Wirkungsweise als Teil eines mehrstückigen ersten Gehäuseteils 7 zu betrachten. Reinigungstechnisch ist eine derartige Führungsbuchse 7* dann unproblematisch, wenn sie, bezogen auf die produktbeaufschlagte zweite Dichtung 5, hinter dem gegenüber der Umgebung U abgedichteten Spülschloss 107, 106 angeordnet ist, wie dies die Figuren 2 und 4 zeigen. In diesem Falle erfolgt eine ggf. vorliegende Keimverschleppung aus der Umgebung U nur in das Spülschloss 106, 107 hinein, wo eine wirksame Abreinigung möglich ist. Problematischer sind Führungsbuchsen 7* der in Rede stehenden Art, wenn sie in Durchführungen ohne Spülschloss 106, 107 verwendet werden und hinter der produktbeaufschlagten zweiten Dichtung 5 angeordnet sind. In diesem Falle ergibt sich zwischen der zweiten Dichtung 5 und der Führungsbuchse 7* ein kritischer Hohlraum 10, und auch die die Führungsbuchse 7* im ersten Gehäuseteil 7 berandenden Spalte oder Kapillarspalte sind dann als kritischer Hohlraum 10 zu betrachten. Die Wandungen W7 der Führungsbuchse 7* sind daher, wie die Wandungen W7 des ersten Gehäuseteils 7, im Sinne der vorliegenden Erfindung mit dem Material M oder der Materialkombination M* auszurüsten.

### BEZUGSZEICHENLISTE DER VERWENDETEN ABKÜRZUNGEN

- 100: Prozesskomponente
- 101: erstes Gehäuse
- 102: zweites Gehäuse

- 103: erstes Schließglied
- 103a: erste Stange

- 104: zweites Schließglied
- 105: Antrieb
- 106: erstes Spülschloss
- 107: zweites Spülschloss
- 108: Verbindungsöffnung

- 1: erster Innenraum
- 2: zweiter Innenraum

- 3: Leckagehohlraum
- 3a: Verbindungsweg

- 4: erste Dichtung (statisch wirkend)
- 5: zweite Dichtung (dynamisch wirkend)
- 6: Sitzdichtung

- 7: erster Gehäuseteil (zur Aufnahme der ersten Dichtung 4 oder der zweiten Dichtung 5)
- 7*: Führungsbuchse (Einlegeteil; Teil eines mehrstückigen ersten Gehäuseteils 7)

- 8: zweiter Gehäuseteil (zur Begrenzung der ersten Dichtung 4)

- 9: bewegter Teil (Hohlstange; Druckausgleichskolben - gegenüber der dy-namisch wirkenden Dichtung 5)
- 10: kritischer Hohlraum

- Bi: reinigungskritische Bereiche (allgemein; i = 1 bis n))
- B1: erster Bereich; Bereich einer ersten Dichtung 4 (Gehäusedichtung)
- B2: zweiter Bereich; Bereich einer zweiten Dichtung 5 (Stangendichtung)
- B3: dritter Bereich; Bereich einer Sitzdichtung 6 im Druckeingriff
- B4: vierter Bereich; Bereich einer Sitzdichtung 6 im Druck- und Gleiteingriff
- B5: fünfter Bereich; Bereich einer Sitzdichtung 6 im Gleiteingriff
- B6: sechster Bereich; Bereich eines kritischen Hohlraums 10

- M: Stoff (allgemein)
- M*: Stoffkombination (allgemein)
- M1: biozid wirkender Stoff
- M2: bakterizid wirkender Stoff
- M3: antibakteriell wirkender Stoff
- M4: antimikrobiell wirkender Stoff

- 07: erste Oberfläche des ersten Gehäuseteils 7, 7*
- 08: zweite Oberfläche des zweiten Gehäuseteils 8
- 09: dritte Oberfläche des bewegten Teils 9
- O10: vierte Oberfläch(en) des kritischen Hohlraums 10

- P: Nahrungsmittelprodukt
- R: Reinigungsflüssigkeit (oder Reinigungsmittel)

- U: Umgebung

- W7: erste Wandung des ersten Gehäuseteils 7, 7*
- W8: zweite Wandung des zweiten Gehäuseteils 8
- W9: dritte Wandung des bewegten Teils 9
- W10: vierte Wandung(en) des kritischen Hohlraums 10

## Patentansprüche

1. Verwendung eines Materials (M) mit
• biozider (M1) oder
• bakterizider (M2) oder
• antibakterieller (M3) oder
• antimikrobieller Wirkung (M4)
oder einer Materialkombination (M*), die mehr als ein genanntes Material (M1, M2, M3, M4) aufweist, zur Ausrüstung von eine jeweilige Dichtung (4, 5, 6) berandende(n) oder sich dieser auf deren von einem Nahrungsmittelprodukt (P) abgewandten Seite zur Begrenzung eines Hohlraums (10) anschließenden Wandung(en) (W7, W8, W9, W10) wenigstens eines Bereichs (Bi) der folgenden reinigungskritischen Bereiche (B1, B2, ..., Bi, ..., Bn) von Prozesskomponenten (100) der Prozesstechnik für Nahrungsmittelprodukte (P):
• Wandungen (W7, W8) eines ersten Gehäuseteils (7) und eines zweiten Gehäuseteils (8) in einem ersten Bereich (B1), die die produktbeaufschlagte, statisch wirkende erste Dichtung (4) zwischen einem das Nahrungsmittelprodukt (P) aufnehmenden Innenraum (1; 2) und einer Umgebung (U) der Prozesskomponente (100) begrenzen und relativ zur ersten Dichtung (4) unbeweglich sind;
• Wandungen (W7, W9) eines ersten Gehäuseteilen (7; 7*) und eines gegenüber letzterem bewegten Teils (9) in einem zweiten Bereich (B2), die die produktbeaufschlagte, dynamisch wirkende zweite Dichtung (5) zwischen einem das Nahrungsmittelprodukt (P) aufnehmenden Innenraum (1; 2) und einer Umgebung (U) der Prozesskomponente (100) begrenzen, wobei der bewegte Teil (9) relativ zur zweiten Dichtung (5) beweglich ist;
• Wandungen (W9) eines bewegten Teils (9), die die produktbeaufschlagte Sitzdichtung (6) begrenzen und relativ zur Sitzdichtung (6) unbeweglich sind, wobei die Sitzdichtung (6)
o in einem dritten Bereich (B3) temporär im Druckeingriff mit einer zugeordneten Sitzfläche steht;
o in einem vierten Bereich (B4) temporär im Druck- und Gleiteingriff mit einer zugeordneten Sitzfläche steht;
o in einem fünften Bereich (B5) temporär im Gleiteingriff mit einer zugeordneten Sitzfläche steht;
• von Wandungen (W7, W8; W7, W9; W10) begrenzter kritischer Hohlraum (10) in einem sechsten Bereich (B6), der sich an die dem Nahrungsmittelprodukt (P) abgewandte Seite der ersten oder der zweiten Dichtung (4, 5) anschließt.

2. Verwendung nach Anspruch 1,
**dadurch gekennzeichnet,**
**dass** die jeweilige Oberfläche (07, 08, 09, 010) der Wandung (W7, W8, W9, W10) mit dem Material (M) oder der Materialkombination (M*) beschichtet ist.

3. Verwendung nach Anspruch 1,
**dadurch gekennzeichnet,**
**dass** die gesamte Wandstärke der jeweiligen Wandung (W7, W8, W9, W10) homogen mit dem Material (M) oder der Materialkombination (M*) versetzt oder homogen aus dem Material (M) oder der Materialkombination (M*) beschaffen ist.

4. Verwendung nach einem der vorhergehenden Ansprüche,
**dadurch gekennzeichnet,**
**dass** der bewegte Teil (9) gegenüber der zweiten Dichtung (5) eine oszillierende translatorische oder eine oszillierende rotative oder eine rotative Bewegung ausführt.

5. Verwendung nach einem der Ansprüche 1 bis 3,
**dadurch gekennzeichnet,**
**dass** der die Sitzdichtung (6) aufweisende bewegte Teil (9) eine oszillierende translatorische oder eine oszillierende rotative oder eine rotative Bewegung ausführt.

6. Prozesskomponente (100) der Prozesstechnik für Nahrungsmittelprodukte (P) mit wenigstens einem Bereich der folgenden reinigungskritischen Bereiche (Bi):
• Wandungen (W7, W8) eines ersten Gehäuseteils (7) und eines zweiten Gehäuseteils (8) in einem ersten Bereich (B1), die eine produktbeaufschlagte, statisch wirkende erste Dichtung (4) zwischen einem das Nahrungsmittelprodukt (P) aufnehmenden Innenraum (1; 2) und einer Umgebung (U) der Prozesskomponente (100) begrenzen und relativ zur ersten Dichtung (4) unbeweglich sind;
• Wandungen (W7, W9) eines ersten Gehäuseteilen (7; 7*) und eines gegenüber letzterem bewegten Teils (9) in einem zweiten Bereich (B2), die eine produktbeaufschlagte, dynamisch wirkende zweite Dichtung (5) zwischen einem das Nahrungsmittelprodukt (P) aufnehmenden Innenraum (1; 2) und einer Umgebung (U) der Prozesskomponente (100) begrenzen, wobei der bewegte Teil (9) relativ zur zweiten Dichtung (5) beweglich ist;
• Wandungen (W9) eines bewegten Teils (9), die eine produktbeaufschlagte Sitzdichtung (6) begrenzen und relativ zur Sitzdichtung (6) unbeweglich sind, wobei die Sitzdichtung (6)
o in einem dritten Bereich (B3) temporär im Druckeingriff mit einer zugeordneten Sitzfläche steht;
o in einem vierten Bereich (B4) temporär im Druck- und Gleiteingriff mit einer zugeordneten Sitzfläche steht;
o in einem fünften Bereich (B5) temporär im Gleiteingriff mit einer zugeordneten Sitzfläche steht;
• von Wandungen (W7, W8; W7, W9; W10) begrenzter kritischer Hohlraum (10) in einem sechsten Bereich (B6), der sich an die dem Nahrungsmittelprodukt (P) abgewandte Seite der ersten oder der zweiten Dichtung (4, 5) anschließt,
**dadurch gekennzeichnet,**
**dass** die die jeweilige Dichtung (4, 5, 6) berandende(n) oder sich dieser auf deren vom Nahrungsmittelprodukt (P) abgewandten Seite zur Begrenzung des Hohlraums (10) anschließenden Wandung(en) (W7, W8, W9, W10) wenigstens eines Bereichs (Bi) der reinigungskritischen Bereiche (B1, B2, ..., Bi, ..., Bn) eine Ausrüstung mit einem Material (M) mit
• biozider (M1) oder
• bakterizider (M2) oder
• antibakterieller (M3) oder
• antimikrobieller Wirkung (M4)
oder einer Materialkombination (M*), die mehr als ein genanntes Material (M1, M2, M3, M4) aufweist, erhalten.

7. Prozesskomponente (100) nach Anspruch 6,
**dadurch gekennzeichnet,**
**dass** die jeweilige Oberfläche (07, 08, 09, O10) der Wandung (W7, W8, W9, W10) mit dem Material (M) oder der Materialkombination (M*) beschichtet ist.

8. Prozesskomponente (100) nach Anspruch 6,
**dadurch gekennzeichnet,**
**dass** die gesamte Wandstärke der jeweiligen Wandung (W7, W8, W9, W10) homogen mit dem Material (M) oder der Materialkombination (M*) versetzt oder homogen aus dem Material (M) oder der Materialkombination (M*) beschaffen ist.

9. Prozesskomponente (100) nach einem der Ansprüche 6 bis 8,
**dadurch gekennzeichnet,**
**dass** der bewegte Teil (9) gegenüber der zweiten Dichtung (5) eine oszillierende translatorische oder eine oszillierende rotative oder eine rotative Bewegung ausführt.

10. Prozesskomponente (100) nach einem der Ansprüche 6 bis 8,
**dadurch gekennzeichnet,**
**dass** der die Sitzdichtung (6) aufweisende bewegte Teil (9) eine oszillierende translatorische oder eine oszillierende rotative oder eine rotative Bewegung ausführt.

11. Prozesskomponente (100) nach einem der Ansprüche 6 bis 8,
**dadurch gekennzeichnet,**
**dass** die Prozesskomponente (100) ein Hubventil ist in Form
• eines Einsitzventils oder
• eines Doppelsitzventils oder
• eines Doppeldichtventils oder
• eines Regelventils mit Regelkegel.

12. Prozesskomponente (100) nach einem der Ansprüche 6 bis 8,
**dadurch gekennzeichnet,**
**dass** die Prozesskomponente (100) ein Scheiben- oder Klappenventil ist in Form
• eines Einscheibenventils oder
• eines leckagegesicherten Einscheibenventils oder
• eines Doppelscheibenventils.

## Claims

1. The use of a material (M) having
• biocidic (M1) or
• bactericidal (M2) or
• antibacterial (M3) or
• antimicrobial effects (M4),
or of a combination of materials (M*) comprising more than one such material (M1, M2, M3, M4), for equipping a wall or walls (W7, W8, W9, W10) of at least one area (Bi) of the following cleaning critical areas (B1, B2, ..., Bi, .., Bn), said wall(s) bordering the respective seal (4, 5, 6) or adjoining same on the side facing away from the food product (P) in order to delimit the hollow space (10):
• walls (W7, W8) of a first housing section (7) and of a second housing section (8) in a first area (B1), said walls delimiting the statically acting first seal (4), exposed to product, between an inner space (1; 2) accommodating the product (P) and an environment (U) of the process components (100), and being immmobile relative to said seal (4);
• walls (W7, W9) of a first housing section (7; 7*) and of a moved part (9) opposite the latter in a second area (B2), said walls delimiting the dynamically acting second seal (4), exposed to product, between an inner space (1; 2) accommodating the product (P) and an environment (U) of the process components (100), said moved part (9) being movable relative to the second seal (5);
• walls (W9) of a moved part (9), said walls delimiting the seat seal (6) exposed to product and which are immobile relative to the seat seal (6) , wherein said seat seal (6)
o is temporarily in compressive engagement with an associated seat surface in a third area (B3);
o is temporarily in compressive and sliding engagement with an associated seat surface in a fourth area (B4);
o is temporarily in sliding engagement with an associated seat surface in a fifth area (B5);
• a critical hollow space (10) delimited by walls (W7, W8; W7, W9; W10) in a sixth area (B6) adjoining the side of the first or the second seal (4, 5) facing away from the food product (P).

2. The use according to claim 1,
**characterised in that**
the respective surface (O7, O8, O9, O10) of the wall (W7, W8, W9, W10) is coated with the material (M) or with the combination of materials (M*).

3. The use according to claim 1,
**characterised in that**
the entire thickness of the respective wall (W7, W8, W9, W10) is homogenously interspersed with the material (M) or the combination of materials (M*), or is homogenously made of the material (M) or the combination of materials (M*).

4. The use according to any one of the preceding claims,
**characterised in that**
the moved part (6) performs an oscillating translational or an oscillating rotative or a rotative movement relative to the second seal (5).

5. The use according to any one of claims 1 to 3,
**characterised in that**
the moved part (9) having the seat seal (6) performs an oscillating translational or an oscillating rotative or a rotative movement.

6. A process engineering component (100) for processing food products (P), comprising at least one area (Bi) of the following critical cleaning areas:
• walls (W7, W8) of a first housing section (7) and of a second housing section (8) in a first area (B1), said walls delimiting a statically acting first seal (4), exposed to product, between an inner space (1; 2) accommodating the product (P) and an environment of the process components (100), and being immmobile relative to said seal (4);
• walls (W7, W9) of a first housing section (7; 7*) and of a moved part (9) opposite the latter in a second area (B2), said walls delimiting a dynamically acting second seal (4), exposed to product, between an inner space (1; 2) accommodating the product (P) and an environment of the process components (100), said moved part (9) being movable relative to the second seal (5);
• walls (W9) of a moved part (9), said walls delimiting a seat seal (6) exposed to product and which are immobile relative to the seat seal (6), wherein said seat seal (6)
o is temporarily in compressive engagement with an associated seat surface in a third area (B3):
o is temporarily in compressive and sliding engagement with an associated seat surface in a fourth area (B4);
o is temporarily in sliding engagement with an associated seat surface in a fifth area (B5);
• a critical hollow space (10) delimited by walls (W7, W8; W7, W9; W10) in a sixth area (B6) adjoining the side of the first or the second seal (4, 5) facing away from the food product (P),
**characterised in that**
the wall or walls (W7, W8, W9, W10) of at least one area (Bi) of the following cleaning critical areas (B1, B2, ..., Bi, ..., Bn), said wall(s) bordering the respective seal (4, 5, 6) or adjoining same on the side facing away from the food product (P) in order to delimit the hollow space (10), are equipped with a material (M) having
• biocidic (M1) or
• bactericidal (M2) or
• antibacterial (M3) or
• antimicrobial effects (M4),
or with a combination of materials (M*) comprising more than one said material (M1, M2, M3, M4).

7. The process component (100) according to claim 6,
**characterised in that**
the respective surface (O7, O8, O9, 010) of the wall (W7, W8, W9, W10) is coated with the material (M) or with the combination of materials (M*).

8. The process component (100) according to claim 6,
**characterised In that**
the entire thickness of the respective wall (W7, W8, W9, W10) is homogenously interspersed with the material (M) or the combination of materials (M*), or is homogenously made of the material (M) or the combination of materials (M*).

9. The process component (100) according to any one of claims 6 to 8.
**characterised in that**
the moved part (6) performs an oscillating translational or an oscillating rotative or a rotative movement relative to the second seal (5).

10. The process component (100) according to any one of claims 6 to 8,
**characterised in that**
the moved part (9) having the seat seal (6) performs an oscillating translational or an oscillating rotative or a rotative movement.

11. The process component (100) according to any one of claims 6 to 8,
**characterised in that**
the process component (100) is a lift valve in the form of
• a single-seat valve or
• a double-seat valve or
• a double-seal valve or
• a control valve having a control cone.

12. The process component (100) according to any one of claims 6 to 8,
**characterised in that**
the process component (100) is a disc or flap valve in the form of
• a single-disc valve or
• leakproof single-disc valve or
• a double-disk valve.

## Revendications

1. Utilisation d'un matériau (M) ayant
- un effet biocide (M1) ou
- un effet bactéricide (M2) ou
- un effet antibactérien (M3) ou
- un effet antimicrobien (M4)
ou d'une combinaison de matériaux (M*) qui présente plus d'un matériau cité (M1, M2, M3, M4) pour l'équipement de paroi(s) (W7, W8, W9, W10) entourant une garniture respective (4, 5, 6) ou étant adjacentes à celle-ci sur leur côté détourné d'un produit alimentaire (P) pour limiter un espace creux (10), d'au moins une zone (Bi) des zones suivantes critiques pour le nettoyage (B1, B2, ..., Bi, ..., Bn) des composants de processus (100) de la technique de processus pour des produits alimentaires (P) :
- des parois (W7, W8) d'une première partie de boîtier (7) et d'une deuxième partie de boîtier (8) dans une première zone (B1) qui limitent la première garniture (4) agissant statiquement, recevant le produit, entre un espace interne (1 ; 2) contenant le produit alimentaire (P) et un entourage (U) du composant du processus (100) et ne sont pas mobiles par rapport à la première garniture (4) ;
- des parois (W7, W9) d'une première partie de boîtier (7 ; 7*) et d'une dernière partie mobile opposée (9) dans une deuxième zone (B2) qui limitent la deuxième garniture (5) agissant dynamiquement, recevant le produit, entre un espace interne (1 ; 2) contenant le produit alimentaire (P) et un entourage (U) du composant de processus (100), la partie mobile (9) étant mobile par rapport à la deuxième garniture (5) ;
- des parois (W9) d'une partie mobile (9) qui limitent la garniture placée (6) recevant le produit et ne sont pas mobiles par rapport à la garniture placée (6), la garniture placée (6)
- dans une troisième zone (B3) se trouvant temporairement en engagement de pression avec une surface de placement affectée ;
- dans une quatrième zone (B4) se trouvant temporairement en engagement de pression et de glissement avec une surface de placement affectée ;
- dans une cinquième zone (B5) se trouvant temporairement en engagement de glissement avec une surface de placement affectée ;
- un espace creux (10) critique limité par des parois (W7, W8 ; W7, W9 ; W10) dans une sixième zone (B6) qui est adjacente au côté détourné du produit alimentaire (P) de la première ou de la deuxième garniture (4, 5).

2. Utilisation selon la revendication 1,
**caractérisée en ce que**
la surface respective (07, O8, 09, O10) de la paroi (W7, W8, W9, W10) est revêtue avec le matériau (M) ou la combinaison de matériaux (M*).

3. Utilisation selon la revendication 1,
**caractérisée en ce que**
l'épaisseur totale de paroi de la paroi respective (W7, W8, W9, W10) est mélangée de façon homogène avec le matériau (M) ou la combinaison de matériaux (M*) ou est dotée de façon homogène du matériau (M) ou de la combinaison de matériaux (M*).

4. Utilisation selon l'une des revendications précédentes,
**caractérisée en ce que**
la partie mobile (9) en face de la deuxième garniture (5) réalise un mouvement de translation oscillant ou un mouvement rotatif oscillant ou un mouvement rotatif.

5. Utilisation selon l'une des revendications 1 à 3,
**caractérisée en ce que**
la partie (9) mobile présentant la garniture placée (6) réalise un mouvement de translation oscillant ou un mouvement rotatif oscillant ou un mouvement rotatif.

6. Composant de processus (100) de la technique de processus pour des produits alimentaires (P) comportant au moins une zone des zones suivantes critiques pour le nettoyage (Bi) :
- des parois (W7, W8) d'une première partie de boîtier (7) et d'une deuxième partie de boîtier (8) dans une première zone (B1) qui limitent une première garniture (4) agissant statiquement, recevant le produit, entre un espace interne (1 ; 2) contenant le produit alimentaire (P) et un entourage (U) du composant du processus (100) et ne sont pas mobiles par rapport à la première garniture (4) ;
- des parois (W7, W9) d'une première partie de boîtier (7 ; 7*) et d'une dernière partie mobile opposée (9) dans une deuxième zone (B2) qui limitent une deuxième garniture (5) agissant dynamiquement, recevant le produit, entre un espace interne (1 ; 2) contenant le produit alimentaire (P) et un entourage (U) du composant de processus (100), la partie mobile (9) étant mobile par rapport à la deuxième garniture (5) ;
- des parois (W9) d'une partie mobile (9) qui limitent une garniture placée (6) recevant le produit et ne sont pas mobiles par rapport à la garniture placée (6), la garniture placée (6)
- dans une troisième zone (B3) se trouvant temporairement en engagement de pression avec une surface de placement affectée ;
- dans une quatrième zone (B4) se trouvant temporairement en engagement de pression et de glissement avec une surface de placement affectée ;
- dans une cinquième zone (B5) se trouvant temporairement dans une action de glissement avec une surface de placement affectée ;
- un espace creux (10) critique limité par des parois (W7, W8 ; W7, W9 ; W10) dans une sixième zone (B6) qui est adjacente au côté détourné du produit alimentaire (P) de la première ou de la deuxième garniture (4, 5),
**caractérisé en ce que**
la/les paroi(s) (W7, W8, W9, W10) entourant la garniture respective (4, 5, 6) ou adjacentes à celle-ci sur leur côté détourné du produit alimentaire (P) pour limiter l'espace creux (10) d'au moins une zone (Bi) des zones critiques pour le nettoyage (B1, B2, ..., Bi, ..., Bn) reçoivent au moins un équipement avec un matériau (M) ayant
- un effet biocide (M1) ou
- un effet bactéricide (M2) ou
- un effet antibactérien (M3) ou
- un effet antimicrobien (M4)
ou une combinaison de matériaux (M*) qui présente plus d'un matériau cité (M1, M2, M3, M4).

7. Composant de processus selon la revendication 6,
**caractérisé en ce que**
la surface respective (07, 08, 09, 010) de la paroi (W7, W8, W9, W10) est revêtue avec le matériau (M) ou la combinaison de matériaux (M*).

8. Composant de processus (100) selon la revendication 6,
**caractérisé en ce que**
l'épaisseur totale de paroi de la paroi respective (W7, W8, W9, W10) est mélangée de façon homogène avec le matériau (M) ou la combinaison de matériaux (M*) ou est dotée de façon homogène du matériau (M) ou de la combinaison de matériaux (M*).

9. Composant de processus (100) selon l'une des revendications 6 à 8,
**caractérisé en ce que**
la partie mobile (9) en face de la deuxième garniture (5) réalise un mouvement de translation oscillant ou un mouvement rotatif oscillant ou un mouvement rotatif.

10. Composant de processus (100) selon l'une des revendications 6 à 8,
**caractérisé en ce que**
la partie mobile (9) présentant la garniture placée (6) réalise un mouvement de translation oscillant ou un mouvement rotatif oscillant ou un mouvement rotatif.

11. Composant de processus (100) selon l'une des revendications 6 à 8,
**caractérisé en ce que**
le composant de processus (100) est une soupape à course rectiligne sous la forme
- d'une valve à une voie ou
- d'une valve à deux voies ou
- d'une valve d'étanchéité à deux voies ou
- d'une valve de réglage avec un cône de réglage.

12. Composant de processus (100) selon l'une des revendications 6 à 8,
**caractérisé en ce que**
le composant de processus (100) se présente sous la forme d'un obturateur conique ou d'un clapet sous la forme
- d'une valve unidirectionnelle ou
- d'une valve unidirectionnelle anti-fuite ou
- d'une valve bidirectionnelle.
